# EUROPEAN PATENT APPLICATION

(11) **EP 4 603 537 A1**
(43) Date of publication of application: **20.08.2025**
(21) Application number: 24221025.0
(22) Date of filing: 18.12.2024
(51) Int. Cl.: C08L 23/10, C08L 23/16, H01B 3/44

(54) **LOW-DIELECTRIC POLYPROPYLENE RESIN COMPOSITION FOR AUTOMOBILE COMMUNICATION CABLES**

(30) Priority: 16.02.2024 KR 20240022229
(71) Applicant: Hanwha TotalEnergies Petrochemical Co., Ltd., Seosan-si, Chungcheongnam-do 31900 (KR)
(72) Inventor: HWANG, Yong Ki, 31900 Chungcheongnam-do (KR); KIM, Taeyoung, 31900 Chungcheongnam-do (KR); YOON, Seungkyun, 31900 Chungcheongnam-do (KR); CHUN, YongSung, 31900 Chungcheongnam-do (KR)
(74) Representative: HGF

(57) **Abstract**

The present invention relates to a low-dielectric polypropylene resin composition for an inner covering of automobile communication cables and to an inner covering of automobile communication cables prepared therefrom. The polypropylene resin composition according to an embodiment of the present invention has low dielectric characteristics, it can be advantageously used as an inner covering of automobile communication cables.

## Description

### Technical Field

The present invention relates to a low-dielectric polypropylene resin composition for automobile communication cables and to an article molded therefrom. Specifically, the present invention relates to a low-dielectric polypropylene resin composition for an inner covering of automobile communication cables and to an inner covering of automobile communication cables prepared therefrom.

### Background Art of the Invention

A polypropylene resin, which is one of the general-purpose resins, is not only economical but also excellent in mechanical properties, moldability, and chemical resistance. Thus, it is widely used as a material for films, pipes, interior and exterior parts for automobiles, parts for electronic and household appliances, construction and industrial supplies, and the like.

In particular, since polypropylene resins have excellent insulation properties, attempts have been made to use them as an insulation material for power cables.

For example, Korean Laid-open Patent Publication No. 10-2018-0076413 discloses a polypropylene resin composition comprising a propylene homopolymer or a random copolymer of propylene and one or more alpha-olefins other than propylene, wherein the content of a metallic catalyst residue is controlled to a certain level or lower.

In addition, Korean Laid-open Patent Publication No. 10-2021-0054135 discloses a technology for improving insulation resistance by surface-treating inorganic nanoparticles through a sol-gel reaction of hydroxy acid and silane and mixing them with a polypropylene resin.

However, there is a need for the development of a polypropylene resin composition suitable for use as an inner covering of automobile communication cables.

### Prior Art Documents

### Patent Documents

Patent Document 1: Korean Laid-open Patent Publication No. 10-2018-0076413
Patent Document 2: Korean Laid-open Patent Publication No. 10-2021-0054135

### Disclosure of the Invention

### Technical Problem to Solve

An object of the present invention is to provide a low-dielectric polypropylene resin composition suitable for use as an inner covering of automobile communication cables, and an article molded therefrom, specifically, an inner covering of automobile communication cables.

### Solution to the Problem

According to an embodiment of the present invention to accomplish the above object, there is provided a polypropylene resin composition, which comprises (A) a polypropylene-based resin, wherein the polypropylene-based resin (A) comprises (A1) a first polypropylene-based resin and (A2) a second polypropylene-based resin, the first polypropylene-based resin (A1) has a melt index of 2.3 to 3.3 g/10 minutes when measured at 230°C under a load of 2.16 kg and a xylene soluble fraction of 18 to 22% by weight; the second polypropylene-based resin (A2) has a melt index of 1.5 to 2.0 g/10 minutes when measured at 230°C under a load of 2.16 kg and a xylene soluble fraction of 13 to 17% by weight; the content ratio of the first polypropylene-based resin to the second polypropylene-based resin based on weight is in the range of 9:1 to 7:3.

In a specific embodiment of the present invention, the first polypropylene-based resin (A1) and the second polypropylene-based resin (A2) may each be an ethylene-propylene block copolymer.

In a specific embodiment of the present invention, the polypropylene resin composition may further comprise (B) 0 to 1.0% by weight of an antioxidant; (C) 0 to 1.0% by weight of a long-term thermal stabilizer; and (D) 0 to 1.0% by weight of a neutralizer, based on the total weight of components (A) to (D).

In a specific embodiment of the present invention, the antioxidant (B) may comprise at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, 2',3-bis[[3-[3,5-di-t-butyl-4-hydroxyphenyl]propionyl]]propionohydrazide, and tris(2,4-di-t-butylphenyl)phosphite.

In a specific embodiment of the present invention, the long-term thermal stabilizer (C) may comprise at least one selected from the group consisting of distearyl thiodipropionate, dilauryl thiodipropionate, dimyristyl thiodipropionate, ditridecyl thiodipropionate, dioctadecyl 3,3-thiodipropionate, 2,2'-thiobis(4-methyl-6-tertbutylphenol), tetrakis(3 -laurylthiopropionyloxy-methyl)methane, pentaerythritol tetrakis(3-dodecylthiopropionate), lauryl 3,3'-thiodipropionate, stearyl 3,3'-thiodipropionate, distearyl disulfide, and propionic acid 3,3'-thiobisdidodecyl ester.

In a specific embodiment of the present invention, the neutralizer (D) may comprise at least one selected from the group consisting of calcium stearate and hydrotalcite.

In a specific embodiment of the present invention, the antioxidant (B) may be tetrakis(3-(3,5-di-t-butyl-4-hydroxyphenyl)propionate), the long-term thermal stabilizer (C) may be distearyl thiodipropionate, and the neutralizer (D) may be calcium stearate.

In a specific embodiment of the present invention, the polypropylene resin composition may further comprise at least one additive selected from the group consisting of a slip agent, an anti-blocking agent, a filler, a weathering stabilizer, an antistatic agent, a lubricant, a nucleating agent, and a dye.

According to another embodiment of the present invention, there is provided a polypropylene resin article molded from the polypropylene resin composition.

In a specific embodiment of the present invention, the polypropylene resin article may satisfy a Shore D hardness of 58 to 65, an electrostatic capacitance of 104±5 nF, a characteristic impedance of 50±2 Ω/km, and the following attenuation conditions:
0.76 dB/m or less at 900 MHz;
1.04 dB/m or less at 1,500 MHz;
1.08 dB/m or less at 1,600 MHz;
1.20 dB/m or less at 1,900 MHz;
1.23 dB/m or less at 2,000 MHz;
1.40 dB/m or less at 2,500 MHz; and
1.59 dB/m or less at 3,000 MHz.

In a specific embodiment of the present invention, the polypropylene resin article may be an inner covering of an automobile communication cable.

### Brief Description of the Drawings

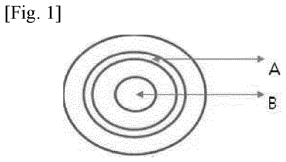

Fig. 1 is a cross-sectional view of an electric cable for illustrating how to measure electrostatic capacitance.

### Effects of the Invention

The polypropylene resin composition according to an embodiment of the present invention has low dielectric characteristics; thus, it can be advantageously used as an inner covering of automobile communication cables.

### Detailed Description for Carrying out the Invention

Hereinafter, the present invention will be described in more detail.

The polypropylene resin composition according to an embodiment of the present invention comprises (A) a polypropylene-based resin, wherein the polypropylene-based resin (A) comprises (A1) a first polypropylene-based resin and (A2) a second polypropylene-based resin, the first polypropylene-based resin (A1) has a melt index of 2.3 to 3.3 g/10 minutes when measured at 230°C under a load of 2.16 kg and a xylene soluble fraction of 18 to 22% by weight; the second polypropylene-based resin (A2) has a melt index of 1.5 to 2.0 g/10 minutes when measured at 230°C under a load of 2.16 kg and a xylene soluble fraction of 13 to 17% by weight; the content ratio of the first polypropylene-based resin to the second polypropylene-based resin based on weight is in the range of 9:1 to 7:3.

### (A) Polypropylene-based resin

The polypropylene resin composition according to an embodiment of the present invention comprises a polypropylene-based resin (A). In the polypropylene resin composition according to an embodiment of the present invention, the polypropylene-based resin (A) comprises (A1) a first polypropylene-based resin and (A2) a second polypropylene-based resin.

In a specific embodiment of the present invention, the first polypropylene-based resin (A1) and the second polypropylene-based resin (A2) may each be an ethylene-propylene block copolymer. Here, the ethylene-propylene block copolymer may be obtained by polymerization of a propylene homopolymer or a propylene-ethylene or propylene-α-olefin random copolymer as a matrix component with an ethylene-propylene rubber copolymer component in stages in reactors.

There is no particular limitation to the method of preparing the ethylene-propylene block copolymer. Any method of preparing an ethylene-propylene block copolymer known in the art to which the present invention pertains may be used as it is or appropriately modified. For example, the ethylene-propylene block copolymer may be prepared by a polymerization method known to those skilled in the art using a commercialized process such as LyondellBasell's Spherizone process, Mitsui's Hypol process, or Grace's Unipol process.

The first polypropylene-based resin (A1) has a melt index of 2.3 to 3.3 g/10 minutes when measured at 230°C under a load of 2.16 kg according to ASTM D 1238 and a xylene soluble fraction of 18 to 22% by weight. When the melt index and xylene soluble fraction of the first polypropylene-based resin (A1) satisfy the above ranges, respectively, it is possible to achieve excellent moldability, circularity, and hardness (Shore D), along with a low dielectric characteristic (electrostatic capacitance).

The second polypropylene-based resin (A2) has a melt index of 1.5 to 2.0 g/10 minutes when measured at 230°C under a load of 2.16 kg according to ASTM D 1238 and a xylene soluble fraction of 13 to 17% by weight. When the melt index and xylene soluble fraction of the second polypropylene-based resin (A2) satisfy the above ranges, respectively, it is possible to achieve excellent moldability, circularity, and hardness (Shore D), along with a low dielectric characteristic (standard attenuation).

For the first polypropylene-based resin (A1) and the second polypropylene-based resin (A2), the xylene soluble fraction may be measured in accordance with the ASTM D5492. Specifically, a polypropylene-based resin is dissolved in xylene at a concentration of 1% by weight at 140°C for 1 hour and left at room temperature (23°C) for 2 hours. The weight of the extract is then measured. The weight thus measured is converted to a percent based on the total weight of the polypropylene-based resin.

In the polypropylene-based resin (A), the content ratio of the first polypropylene-based resin (A1) to the second polypropylene-based resin (A2) based on weight is in the range of 9:1 to 7:3. Preferably, in the polypropylene-based resin (A), the content ratio of the first polypropylene-based resin (A1) to the second polypropylene-based resin (A2) based on weight may be in the range of 8.5:1.5 to 7.5:2.5. If the content ratio of the first polypropylene-based resin (A1) to the second polypropylene-based resin (A2) based on weight is outside the above range, the low dielectric effect desired in the present invention may not be achieved.

The polypropylene resin composition according to an embodiment of the present invention may comprises the polypropylene-based resin (A) substantially alone, but it may further comprise additional components (B) to (D) described below as needed. Therefore, the polypropylene resin composition according to an embodiment of the present invention may comprises 97.5 to 100% by weight of the polypropylene-based resin (A) based on the total weight of components (A) to (D). Preferably, the content of the polypropylene-based resin (A) in the polypropylene resin composition may be 98 to 99.5% by weight. If the content of the polypropylene-based resin (A) in the polypropylene resin composition is less than 97.5% by weight, the low-dielectric effect desired in the present invention may be reduced, or the effect of adding components (B) to (D) may no longer increase, which may be uneconomical.

In a specific embodiment of the present invention, the polypropylene resin composition may further comprise (B) 0 to 1.0% by weight of an antioxidant; (C) 0 to 1.0% by weight of a long-term thermal stabilizer; and (D) 0 to 1.0% by weight of a neutralizer, based on the total weight of components (A) to (D).

### (B) Antioxidant

The polypropylene resin composition according to an embodiment of the present invention may comprise an antioxidant (B).

In a specific embodiment of the present invention, the antioxidant (B) may comprise at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, 2',3-bis[[3-[3,5-di-t-butyl-4-hydroxyphenyl]propionyl]]propionohydrazide, and tris(2,4-di-t-butylphenyl)phosphite. Preferably, the antioxidant (B) may comprise pentaerythritol tetrakis(3-(3,5-di-t-butyl-4-hydroxyphenyl)propionate).

The polypropylene resin composition according to an embodiment of the present invention may comprise the antioxidant (B) in an amount of 0 to 1.0% by weight based on the total weight of components (A) to (D). When the antioxidant (B) is employed, the anti-oxidation effect of the resin composition may be enhanced; however, when the content of the antioxidant (B) exceeds 1.0% by weight, the anti-oxidation effect no longer increases, which may be uneconomical.

### (C) Long-term thermal stabilizer

The polypropylene resin composition according to an embodiment of the present invention may comprise a long-term thermal stabilizer (C).

In a specific embodiment of the present invention, the long-term thermal stabilizer (C) may comprise at least one selected from the group consisting of distearyl thiodipropionate, dilauryl thiodipropionate, dimyristyl thiodipropionate, ditridecyl thiodipropionate, dioctadecyl 3,3-thiodipropionate, 2,2'-thiobis(4-methyl-6-tertbutylphenol), tetrakis(3 -laurylthiopropionyloxy-methyl)methane, pentaerythritol tetrakis(3-dodecylthiopropionate), lauryl 3,3'-thiodipropionate, stearyl 3,3'-thiodipropionate, distearyl disulfide, and propionic acid 3,3'-thiobisdidodecyl ester. Preferably, the long-term thermal stabilizer (C) may comprise distearyl thiodipropionate.

The polypropylene resin composition according to an embodiment of the present invention may comprise the long-term thermal stabilizer (C) in an amount of 0 to 1.0% by weight based on the total weight of components (A) to (D). When the long-term thermal stabilizer (C) is employed, the long-term thermal stability of the resin composition is secured, whereby desirable physical properties can be maintained even when a product is used for a long period of time. However, if the content of the long-term thermal stabilizer (C) exceeds 1.0% by weight, the effect of long-term thermal stability no longer increases, which may be uneconomical.

### (D) Neutralizer

The polypropylene resin composition according to an embodiment of the present invention may comprise a neutralizer (D).

In a specific embodiment of the present invention, the neutralizer (D) may comprise at least one selected from the group consisting of calcium stearate and hydrotalcite. Preferably, the neutralizer (D) may comprise calcium stearate.

The polypropylene resin composition according to an embodiment of the present invention may comprise the neutralizer (D) in an amount of 0 to 1.0% by weight based on the total weight of components (A) to (D). When the neutralizer (D) is employed, residual components of the catalyst used in the production of the polypropylene-based resin (A) may be effectively removed. However, if the content of the neutralizer (D) exceeds 1.0% by weight, the effect of removing residual catalyst components no longer increases, which may be uneconomical.

### (E) Additive

The polypropylene resin composition according to an embodiment of the present invention may further comprise conventional additives within a range that does not depart from the scope of the present invention. For example, the polypropylene resin composition according to an embodiment of the present invention may further comprise at least one additive selected from the group consisting of a slip agent, an anti-blocking agent, a filler, a weathering stabilizer, an antistatic agent, a lubricant, a nucleating agent, and a dye.

There is no particular limitation to the method of preparing the polypropylene resin composition according to an embodiment of the present invention. Any method of preparing a polypropylene resin composition known in the art to which the present invention pertains may be used as it is or as appropriately modified. The respective resin components and compounds described above may be selected and mixed according to a desired order without any particular limitations thereto.

As a specific example, the resins and compounds described above in predetermined amounts are blended for 1 to 2 hours in a blender such as a Henschel mixer, a kneader, a roll, and a Banbury mixer. They are then melted and compounded in a single- or twin-screw extruder at a temperature of 180 to 210°C, thereby preparing a polypropylene resin composition in the form of pellets.

According to another embodiment of the present invention, there is provided a polypropylene resin article molded from the polypropylene resin composition.

There is no particular limitation to the method of preparing a molded article from the polypropylene resin composition according to an embodiment of the present invention. Any method known in the technical field to which the present invention pertains may be used. For example, the polypropylene resin composition according to an embodiment of the present invention may be molded by a conventional method such as injection molding, extrusion molding, casting molding, or the like to prepare a polypropylene resin article.

In a specific embodiment of the present invention, the polypropylene resin article may satisfy a Shore D hardness of 58 to 65, an electrostatic capacitance of 104±5 nF, a characteristic impedance of 50±2 Ω/km, and the following attenuation conditions:
0.76 dB/m or less at 900 MHz;
1.04 dB/m or less at 1,500 MHz;
1.08 dB/m or less at 1,600 MHz;
1.20 dB/m or less at 1,900 MHz;
1.23 dB/m or less at 2,000 MHz;
1.40 dB/m or less at 2,500 MHz; and
1.59 dB/m or less at 3,000 MHz.

In a specific embodiment of the present invention, the polypropylene resin article may be an inner covering of an automobile communication cable.

### Example

Hereinafter, the present invention is explained in detail by the following examples. However, the following examples are intended to further illustrate the present invention. The scope of the present invention is not limited thereto only.

The raw materials used in the Examples and the Comparative Examples are as follows.
A1: Ethylene-propylene block copolymer resin (Hanwha TotalEnergies, BJ200; MI 3 g/10 min., xylene soluble fraction 18-22% by weight)
A2: Ethylene-propylene block copolymer resin (Hanwha TotalEnergies, BJ100; MI 2 g/10 min., xylene soluble fraction 13-17% by weight)
B1: Antioxidant (pentaerythritol tetrakis(3-(3,5-di-t-butyl-4-hydroxyphenyl)propionate))
C1: Long-term thermal stabilizer (distearyl thiodipropionate)
D1: Neutralizer (calcium stearate)
E1: Antistatic agent (Sanyo Chemical, Pelestat 230)

### Preparation Example

Resins and compounds of the type and content (unit: part by weight) as shown in Table 1 below were melted and blended in a twin-screw extruder at a temperature of approximately 180 to 210°C and then pelletized. The prepared pellets were co-extruded with a wire cable through an extruder for communication wires to manufacture a communication cable. The manufactured communication cable was used to manufacture an automobile communication cable through metal shielding and outer sheath coating.

**[Table 1]**

| | Ex. 1 | C. Ex. 1 | C. Ex. 2 | C. Ex. 3 | C. Ex. 4 |
|---|---|---|---|---|---|
| A1 | 79.45 | - | 99.45 | 99.15 | 98.95 |
| A2 | 20 | 99.45 | - | - | - |
| B1 | 0.2 | 0.2 | 0.2 | 0.2 | 0.2 |
| C1 | 0.25 | 0.25 | 0.25 | 0.25 | 0.25 |
| D1 | 0.1 | 0.1 | 0.1 | 0.1 | 0.1 |
| E1 | - | - | - | 0.3 | 0.5 |

### Test Example

The automobile communication cables manufactured in the Example and Comparative Examples were each tested by the following methods. The results are shown in Table 2 below.

### (1) Hardness

In accordance with ISO 868, a specimen having a thickness of 6 mm was injection molded, and the hardness was measured 48 hours later using a shore D hardness tester.

### (2) Electrostatic capacitance (KS C 3004)

Electrostatic capacitance refers to the degree to which an electric charge is stored between electrodes. For shielded cables, an electric charge is accumulated between cores or between cores and shielding layers, which causes noise during signal transmission. This is called electrostatic capacitance. A sample of 50 m in length of a cable to be measured was placed in the air at a temperature of 20±5°C and a humidity of 65±5% and then measured using a capacitance meter (L.C.R. meter) between A and B as shown in Fig. 1. Here, the measurement frequency was 1,000 Hz.

### (3) Characteristic impedance (KS C 3610)

The ratio of the AC voltage applied to an AC circuit to the AC current flowing in the circuit is called impedance (Ω). A sample of 10 m or longer in length of a cable was collected and measured using a network analyzer, which was then converted to a value for 1 m of the cable. Here, the measurement frequency range was the same as that of attenuation.

### (4) Standard attenuation (KS C 3610)

The signal loss of the incident power is called standard attenuation (dB), which is the ratio of the emitted power to the incident power of a cable. It was measured using a standard attenuation meter, and the measurement range was the same as that of impedance.

### (5) Cable circularity

The circularity of the manufactured cable was measured using a three-dimensional measuring machine.

**[Table 2]**

| | | Spec. | Ex. 1 | C. Ex. 1 | C. Ex. 2 | C. Ex. 3 | C. Ex. 4 |
|---|---|---|---|---|---|---|---|
| Hardness (Shore D) | | 58±2 | 61 | 55 | 62 | 58 | 60 |
| Electrostatic capacitance (Nf) | | 104±5 | 101.2-103.5 | 105.22 | 98.12-99.78 | 101.68-103.96 | 100.6-102.4 |
| Characteristic impedance (Ω/km) | | 50±2 | 48.02-50.53 | 47.6-51.15 | 48.37-51.6 | 49.73-51.47 | 48.58-51.87 |
| Standard attenuation (dB/m) | 900 MHz | 0.76 dB/m ↓ | 0.75 | 0.82 | 0.73 | 0.81 | 0.82 |
| | 1,500 MHz | 1.04 dB/m ↓ | 0.99 | 1.13 | 0.97 | 1.08 | 1.11 |
| | 1,600 MHz | 1.08 dB/m ↓ | 1.03 | 1.17 | 1.00 | 1.13 | 1.16 |
| | 1,900 MHz | 1.20 dB/m ↓ | 1.14 | 1.31 | 1.11 | 1.25 | 1.28 |
| | 2,000 MHz | 1.23 dB/m ↓ | 1.17 | 1.35 | 1.14 | 1.29 | 1.32 |
| | 2,500 MHz | 1.40 dB/m ↓ | 1.33 | 1.58 | 1.29 | 1.47 | 1.52 |
| | 3,000 MHz | 1.59 dB/m ↓ | 1.49 | 1.79 | 1.44 | 1.65 | 1.70 |
| Cable circularity | | - | Good | Good | Intermediate | Intermediate | Poor |

As can be seen from Tables 1 and 2 above, the automobile communication cable manufactured from the polypropylene resin composition of the Example, falling within the scope of the present invention, was excellent in hardness, electrostatic capacitance, characteristic impedance, attenuation, and cable circularity.

In contrast, in Comparative Examples 1 to 4, in which only one type of ethylene-propylene block copolymer resin was employed, at least one of hardness, electrostatic capacitance, characteristic impedance, attenuation, and cable circularity was poor. In particular, in Comparative Examples 3 and 4, although an anti-static agent was employed, the standard attenuation did not meet the required specifications.

Accordingly, the polypropylene resin composition, falling within the scope of the present invention, can be advantageously used as an inner covering of automobile communication cables.

## Claims

1. A polypropylene resin composition, which comprises (A) a polypropylene-based resin, wherein the polypropylene-based resin (A) comprises (A1) a first polypropylene-based resin and (A2) a second polypropylene-based resin, the first polypropylene-based resin (A1) has a melt index of 2.3 to 3.3 g/10 minutes when measured at 230°C under a load of 2.16 kg in accordance with ASTM D 1238 and a xylene soluble fraction of 18 to 22% by weight when measured in accordance with the ASTM D5492; the second polypropylene-based resin (A2) has a melt index of 1.5 to 2.0 g/10 minutes when measured at 230°C under a load of 2.16 kg in accordance with ASTM D 1238 and a xylene soluble fraction of 13 to 17% by weight when measured in accordance with the ASTM D5492; the content ratio of the first polypropylene-based resin to the second polypropylene-based resin based on weight is in the range of 9:1 to 7:3.

2. The polypropylene resin composition of claim 1, wherein the first polypropylene-based resin (A1) and the second polypropylene-based resin (A2) are each an ethylene-propylene block copolymer.

3. The polypropylene resin composition of claim 1 or 2, which further comprises (B) 0 to 1.0% by weight of an antioxidant; (C) 0 to 1.0% by weight of a long-term thermal stabilizer; and (D) 0 to 1.0% by weight of a neutralizer, based on the total weight of components (A) to (D).

4. The polypropylene resin composition of claim 3, wherein the antioxidant (B) comprises at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, 2',3-bis[[3-[3,5-di-t-butyl-4-hydroxyphenyl]propionyl]]propionohydrazide, and tris(2,4-di-t-butylphenyl)phosphite.

5. The polypropylene resin composition of claim 3 or 4, wherein the long-term thermal stabilizer (C) comprises at least one selected from the group consisting of distearyl thiodipropionate, dilauryl thiodipropionate, dimyristyl thiodipropionate, ditridecyl thiodipropionate, dioctadecyl 3,3-thiodipropionate, 2,2'-thiobis(4-methyl-6-tertbutylphenol), tetrakis(3 -laurylthiopropionyloxy-methyl)methane, pentaerythritol tetrakis(3-dodecylthiopropionate), lauryl 3,3'-thiodipropionate, stearyl 3,3'-thiodipropionate, distearyl disulfide, and propionic acid 3,3'-thiobisdidodecyl ester.

6. The polypropylene resin composition of any one of claims 3 to 5, wherein the neutralizer (D) comprises at least one selected from the group consisting of calcium stearate and hydrotalcite.

7. The polypropylene resin composition of any one of claims 3 to 6, wherein the antioxidant (B) is tetrakis(3-(3,5-di-t-butyl-4-hydroxyphenyl)propionate), the long-term thermal stabilizer (C) is distearyl thiodipropionate, and the neutralizer (D) is calcium stearate.

8. The polypropylene resin composition of any one of claims 1 to 7, which further comprises at least one additive selected from the group consisting of a slip agent, an anti-blocking agent, a filler, a weathering stabilizer, an antistatic agent, a lubricant, a nucleating agent, and a dye.

9. A polypropylene resin article, which is molded from the polypropylene resin composition according to any one of claims 1 to 8.

10. The polypropylene resin article of claim 9, which satisfies a Shore D hardness of 58 to 65 when measured in accordance with ISO 868, an electrostatic capacitance of 104±5 nF when measured as described at section (2) of the Test Example, a characteristic impedance of 50±2 Ω/km when measured as described at section (3) of the Test Example, and the following attenuation conditions when measured as described at section (4) of the Test Example:
0.76 dB/m or less at 900 MHz;
1.04 dB/m or less at 1,500 MHz;
1.08 dB/m or less at 1,600 MHz;
1.20 dB/m or less at 1,900 MHz;
1.23 dB/m or less at 2,000 MHz;
1.40 dB/m or less at 2,500 MHz; and
1.59 dB/m or less at 3,000 MHz.

11. The polypropylene resin article of claim 9 or 10, which is an inner covering of an automobile communication cable.
